Europäisches Patentamt

European Patent Office

Office européen des brevets

(11) Publication number: **0 475 049 A2**

# EUROPEAN PATENT APPLICATION

(21) Application number: **91112687.8**

(22) Date of filing: **29.07.91**

(51) Int. Cl.5: **G06F 3/06**, G06F 1/18

(30) Priority: **10.09.90 JP 236953/90**

(43) Date of publication of application:
**18.03.92 Bulletin 92/12**

(84) Designated Contracting States:
**DE GB**

(71) Applicant: **HITACHI, LTD.**
**6, Kanda Surugadai 4-chome**
**Chiyoda-ku, Tokyo 101(JP)**

(72) Inventor: **Hiroi, Masato**

**2-41 Tonden Sanjo-1-chome, Kita-ku**
**Sapporo-shi(JP)**
Inventor: **Saitou, Kenichi, Hitachi Fujimiryo**
**415**
**1545, Yoshidacho, Totsuka-ku**
**Yokohama-shi, Kanagawa-ken(JP)**

(74) Representative: **Patentanwälte Beetz sen. -**
**Beetz jun. Timpe - Siegfried -**
**Schmitt-Fumian- Mayr**
**Steinsdorfstrasse 10**
**W-8000 München 22(DE)**

(54) **Computer comprising a disk storage device.**

(57) In a computer apparatus including at least an arithmetic and processing section (CPU) and a main memory (M) and a disk control section (PIF') connected to the above described arithmetic and processing section, the arithmetic and processing section, the main memory and the disk control section being disposed and connected on one print-circuit board (6), a disk storage device (2') which can be controlled by the above described arithmetic and processing section (CPU) via the above described disk control section (PIF') being included in the above described computer apparatus, the above described disk storage device is separated into a mechanism section (21, 22, 23) and a control circuit section (FDC1, FDC2) for controlling the above described mechanism section. At least the above described control circuit section is mounted on the above described print-circuit board (6). Delivery and reception of signals between the arithmetic and processing section (CPU) and the control circuit section (FDC1, FDC2) are performed by print-circuit wiring or the like.

F I G. 2

## BACKGROUND OF THE INVENTION

### FIELD OF THE INVENTION

The present invention relates to a computer apparatus, such as a personal computer apparatus, having an external storage, and in particular to a computer apparatus of such a type that an external storage is housed within the housing main body of the computer apparatus.

### DESCRIPTION OF THE PRIOR ART

Comparatively small-sized computer apparatuses of a kind generally referred to as personal computer apparatuses generally each have a floppy disk storage or a hard disk storage as an external storage. There is a general tendency that these external storage devices are housed in the housing main body of the computer apparatus. At this time, such an external storage is formed as a single piece and disposed and fixed within the housing main body of the computer apparatus. And such an external storage is so disposed and fixed as to be separate from a main print-circuit board on which a principal portion of the computer apparatus, i.e., a main storage section, an arithmetic and processing section (hereafter abbreviated as CPU), and a peripheral control section are mounted. The main print-circuit board and the above described external storage are electrically connected by using connecters and cables. The external storage can be controllled by the CPU mounted on the main print-circuit board.

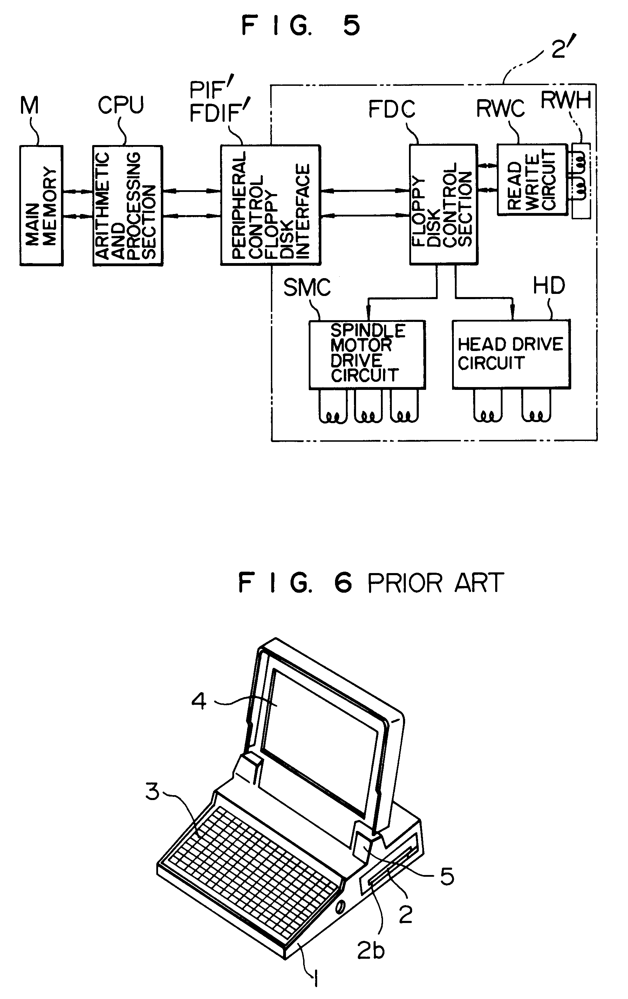

Fig. 6 is an exterior view showing an example of such a computer apparatus. Numeral 1 denotes a housing main body of the computer apparatus. Numeral 2 denotes a floppy disk storage device disposed and fixed in this housing main body 1 as an external storage. Numeral 3 denotes a keyboard disposed on the front part of the housing main body 1 as an input section. Numeral 4 denotes a display device. A liquid crystal display device, a plasma display device or the like is typically used as the display device 4. The display device 4 is so fixed to the housing main body 1 by means of a hinge section 5 as to be openable and closable. By closing the display section 4 from the open state as illustrated, the keyboard 3 is covered. In this state, the exterior view of the whole takes the shape of a box.

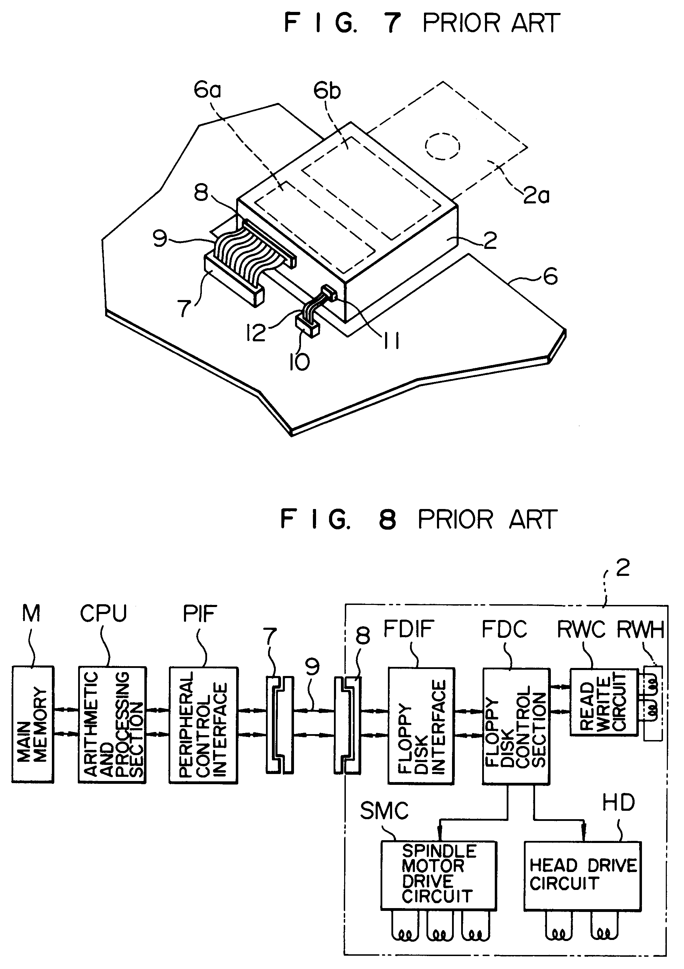

Fig. 7 is a partial oblique view showing the disposition relation between the main print-circuit board disposed in the housing main body 1 and the floppy disk. Numeral 6 denotes a main print-circuit board of the computer apparatus. A main memory, a CPU, and a peripheral control interface section are mounted on the main print-circuit board 6. They are electrically connected by print-circuit wiring in accordance with predetermined relations. This main print-circuit board 6 is disposed on and fixed to the housing main body 1 by means of fixing means such as screws. Numeral 2 denotes the above described floppy disk storage device, which is disposed on and fixed to the housing main body 1 by means of fixing means such as screws in the same way. Numeral 7 denotes a connector disposed on the main print-circuit board 6, and numeral 8 denotes a connector provided on the floppy disk storage device 2. Numeral 9 denotes a cable having, at both ends thereof, connectors to be respectively connected to the connectors 7 and 8. By this cable 9, the main print-circuit board 6 and the floppy disk storage device 2 are electrically interconnected, delivery and receipt of signals or the like being thus made possible. Numerals 10 and 11 denote a connector mounted on the main print-circuit board 6 and a connector provided on the floppy disk storage device 2, respectively. Numeral 12 denotes a power supply cable having, at both ends thereof, connectors to be connected to the connectors 10 and 11 to supply power to the floppy disk storage device 2. By inserting a floppy disk 2a into the floppy disk storage device 2 through a floppy disk slit 2b provided in the front part of the floppy disk storage device 2, this floppy disk 2a is loaded into the floppy disk storage device 2, data reading/writing being thus made possible.

Fig. 8 is a block diagram showing the erlectrical configuration of the main print-circuit board 6 of the computer apparatus and the floppy disk storage device 2. CPU denotes an arithmetic and processing section, M a main memory, PIF a peripheral control interface circuit, 7 and 8 the connectors described above, and 9 the cable described above. The floppy disk storage device 2 comprises: a floppy disk interface circuit FDIF for receiving data transmitted from the CPU via the peripheral control interface circuit PIF, the connector 7, the cable 9, and the connector 8; and a floppy disk control circuit FDC for controlling the whole of the floppy disk storage device 2 on the basis of signals received via the above described interface circuit FDIF. RWC denotes a read write circuit for inputting a signal fed from the floppy disk control circuit FDC to a read write head RWH of the floppy disk storage device 2 and for outputting a signal fed from the read write head RWH to the floppy disk control circuit FDC. HD denotes a head drive circuit for controlling the movement of the head RWH and positioning the head RWH on the basis of a control signal fed from the control circuit FDC. SMC denotes a drive circuit of a spindle motor for driving and rotating the loaded floppy disk 2a.

These circuits RWC, HD and SMC are mounted on a print-circuit board incorporated into the floppy disk storage device 2 as shown in Fig. 7. In general, the read write circuit RWC, the head drive circuit HD, the floppy disk interface circuit FDIF, and the floppy disk control circuit FDC are mounted on one print-circuit board 6a, and the spindle motor drive circuit SMC is mounted on the other print-circuit board 6b.

Owing to the configuration heretofore described, the floppy disk storage device 2 is driven and controlled on the basis of a command fed from the CPU, and delivery and reception of data between the loaded floppy disk 2a and the CPU are made possible.

As for a floppy disk storage device of this kind, JP-A-64-79986 can be referred to.

SUMMARY OF THE INVENTION

As described above, a personal computer apparatus of the prior art is so configured that the main print-circuit board may be separate from the floppy disk storage device used as the external storage and they may be interconnected via the connectors and cables. Therefore, the connectors 7 and 10 on the main print-circuit board 6 as well as the connectors 8 and 11 on the floppy disk storage device 2 become necessary. In addition, the cables 9 and 12 for connecting these connectors also become necessary.

Further, since signals are electrically transferred via the cable 9, an interface circuit, principally an interface signal driver circuit within the interface circuit is required on each of the main print-circuit board 6 and the floppy disk storage device 2 from the viewpoint of signal matching.

Users strongly demands smaller-sized and thinner personal computers or the like in existing circumstances. Therefore, the fact is that each manufacturer spends a long development time to establish a mounting technique for incorporating more functions in a smaller space. If some components can be omitted, therefore, a large tolerance is provided in mounting.

The present invention has been made in view of the above described points. An object of the present invention is to provide a computer apparatus capable of reducing the size of a disk storage device, and eventually capable of reducing the size of the computer apparatus.

Another object of the present invention is to provide a computer apparatus capable of reducing the thickness of a disk storage device, and eventually capable of reducing the thickness of the computer apparatus.

Still another object of the present invention is to provide a computer apparatus capable of simplifying the circuit configuration relating to a disk storage device and that computer apparatus.

In order to achieve the above described objects, the present invention has a feature that a disk storage device is separated into a mechanism section and a control circuit section for controlling that mechanism section, and at least this control circuit section is mounted on one print-circuit board on which an arithmetic and processing section of a computer apparatus, a main memory connected to this arithmetic and processing section, and a disk control section are mounted.

In mounting the mechanism section of the disk storage device on the above described print-circuit board, the above described mechanism section may be attached directly to the above described print-circuit board in consideration of the attachment precision, strength, or the like by attaching the mechanism section to a frame once and then attaching this frame to the above described print-circuit board.

By doing so, delivery and receipt of signals between a CPU and the control section of the disk storage device can be performed by means of print-circuit wiring on a main print-circuit board, for example, without using cables.

Since the function of cables and connectors associated with the cables can be fulfilled, therefore, these cables and connectors can be omitted. Computer apparatuses can be reduced in size or thickness accordingly.

Further, as a result of omission of cables and connectors, the interface circuit can be omitted and the circuit configuration can be simplified, and hence further reduction in size or thickness becomes possible.

BRIEF DESCRIPTION OF THE DRAWING

Fig. 1 is a mounting geometrical view showing an embodiment of the present invention;
Fig. 2 is a partial sectional view of Fig. 1;
Fig. 3 is a top view of Fig. 1;
Fig. 4 is a block diagram showing the circuit configuration of Fig. 3;
Fig. 5 is a block diagram of a circuit configuration showing another embodiment;
Fig. 6 is an oblique view showing an example of an exterior view of a computer apparatus;
Fig. 7 is an oblique view showing the mounting state of a disk storage device of the prior art; and
Fig. 8 is a block diagram showing the circuit configuration of the prior art.

DESCRIPTION OF THE PREFERRED EMBODIMENTS

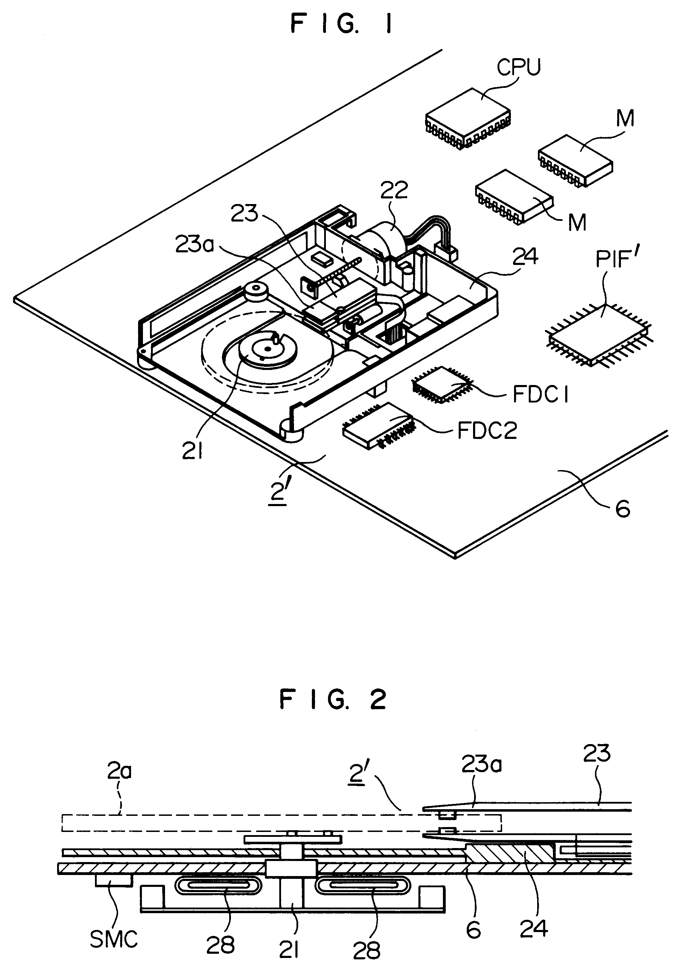

An embodiment of the present invention will hereafter be described by referring to Figs. 1 to 4.

Fig. 1 is an oblique view showing the configuration of a main print-circuit board of a personal computer apparatus on which a floppy disk storage device is mounted. Fi Fig. 2 is a partial sectional view of Fig. 1.

A floppy disk device 2' comprises, as its mechanism section, a spindle motor 21 for rotating a floppy disk, a head assembly 23 for reading/writing data with respect to the floppy disk, and a head drive motor 22 for driving the head 23a. The spindle motor 21, the head assembly 23, and the head drive motor 22 are mechanically coupled securely by a frame 24. This frame 24 is fixed to a main print-circuit board 6 by fixing means such as screws. CPU and M denote a CPU and a main memory mounted on the main print-circuit board 6, respectively. PIF' denotes an interface circuit for controlling peripheral devices. In this case, the interface circuit PIF' forms a disk control section.

FDC1 and FDC2 denote control circuit sections for the floppy disk storage device. The control circuit sections FDC1 and FDC2 are formed by integrated circuits and they are both mounted on the main print-circuit board 6.

By mounting the control circuit sections FDC1 and FDC2 of the floppy disk device on the main print-circuit board 6 of the personal computer apparatus, the main body of the floppy disk storage device comprises the spindle motor 21, the head drive motor 22, the head 23a, the head assembly 23, and the frame 24. These components are attached to the frame 24 as described above, and this frame 24 is attached to the main print-circuit board 6. Among them, however, the spindle motor 21 comprises a spindle motor drive coil 28 mounted under the main print-circuit board 6 as shown in Fig. 2. In Fig. 2, a broken line indicates the loaded state of the floppy disk 2a.

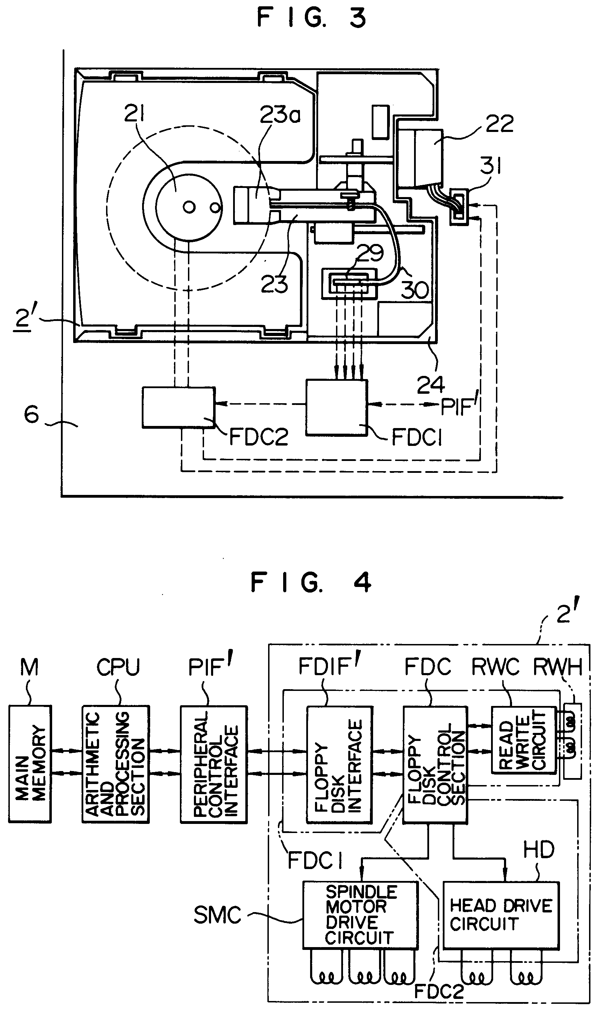

Fig. 3 shows a top view of Fig. 1. Fig. 4 is a block diagram showing the electrical connection configuration between the computer apparatus and the floppy disk device 2'. Fig. 4 will be hereafter described by referring to Fig. 3. In this embodiment, the circuit section of the floppy disk device is mounted on the main print-circuit board 6 on which the principal portion of the computer apparatus, i.e., the CPU, the main memory M, and the interface circuit PIF' for controlling peripheral devices are mounted. And the interface circuit PIF' for peripheral control is directly connected to the floppy disk interface circuit FDIF' by printed patterns on the main print-circuit board 6. In case of the present embodiment, the control circuit section FDC1 comprises the floppy disk interface circuit FDIF', a part of a floppy disk control circuit FDC, and a read write circuit section RWC as shown in Fig. 4. The control circuit FDC2 comprises the remaining part of the floppy disk control circuit FDC and a head drive circuit portion. A spindle motor drive circuit section SMC is a power section, which is mounted on the rear face of the main print-circuit board 6 and around the spindle motor 21 as shown in Fig. 2. From the viewpoint of mounting, therefore, the control circuit FDC is connected to the interface circuit FDIF' for peripheral devices on the main print-circuit board 6 as shown in Fig. 3. And the control circuit FDCI is so connected to the head 23a via a connector 29 and a flexible cable 30 on the main print-circuit board 6 that delivery and reception of signals may be attained. Further, signals relating to the head drive motor 22 and the spindle motor 21 are so coupled on the main print-circuit board 6 as to be transmitted to the control circuit FDC2. Thereby, the control circuit section FDC2 is so connected on the main print-circuit board 6 as to transfer the signal relating to the spindle motor 21 to the spindle motor 21 via the spindle motor drive circuit section SMC. The control circuit section FDC2 is also so connected on the main print-circuit board 6 as to supply the signal relating to the head drive motor 22 to the head drive motor 22 via a connector 31.

Owing to the configuration heretofore described, the control circuit sections FDC1 and FDC2 of the floppy disk storage device 2' are directly connected to the computer apparatus side by print-circuit wiring without intervention of connectors and cables. The computer apparatus outputs an instruction from the CPU to the interface circuit PIF' for peripheral devices. This is transferred to the control circuit section FDC2 via the control circuit section FDC1. Upon receiving it, the control circuit FDC2 transmits control signals to the mechanical part of the floppy disk storage device 2', i.e., the spindle motor drive circuit SMC and the head drive motor 22 and exercises control to bring them to desired states and activate them. On the other hand, the control circuit section FDC1 conducts delivery and reception of signals with the head 23. In case of read mode, the control circuit section FDC1 converts a signal fed from the head 23a into a predetermined signal and transmits the signal to the interface circuit PIF' for peripheral devices and eventually to the CPU. In case of write mode, the control circuit section FDC1 exercises signal conversion upon write data fed from the interface circuit PIF' for peripheral devices and writes them onto the floppy disk 2a to store them.

The embodiment heretofore described makes possible such a configuration that the floppy disk storage device 2' is separated into the mechanism section and the control circuit section and are both mounted on the main print-circuit board 6, and the computer apparatus and the control circuit sections FDC1 and FDC2 are interconnected on the main print-circuit board 6 by print-circuit wiring. Therefore, electrical connection between the computer apparatus and the floppy disk storage device 2' becomes possible without needing connectors and cables. As a result, the configuration of the whole can be simplified. Reduction of thickness and/or size of the whole of the computer apparatus can be attained. Further, since cables can be omitted, influence of noise or the like can be reduced.

Further, in the embodiment, the interface circuit PIF' for peripheral devices of the computer apparatus can be directly connected on the main print-circuit board 6 to the control circuit section FDC1 of the floppy disk storage device 2' by means of print-circuit wiring. Therefore, driver circuits of signals attendant upon the interface between circuits PIF' and FDC1 can be omitted or significantly simplified. As compared with the prior art, the circuit configuration of the circuit sections PIF' and FDC1 can be simplified.

Further, since the floppy disk storage device 2' is separated into the mechanism section and the control circuit section, assembling the floppy disk storage 2' and incorporating this into the computer apparatus are facilitated, and the work load for them can be reduced.

Further, in the embodiment, the mechanism section of the floppy disk storage device 2' unites with the frame 24 to be attached to the main print-circuit board 6. Therefore, a bad influence is not exerted upon components needing mechanical precision, especially upon the head assembly 23.

Fig. 5 shows another embodiment. The embodiment of Fig. 5 differs from that of Fig. 4 in having the interface circuit PIF' for peripheral devices and the floppy disk interface circuit FDIF' formed in one body. By doing so, further reduction in size and thickness becomes possible. The extent of components to be united as one body by the semiconductor technique of this circuit section depends upon the convenience of the design. Irrespective of Fig. 5, various kinds of unification and separation are possible. Further, this is made possible as a result of uniting the computer apparatus and the circuit section of the floppy disk storage device 2' in one body on the main print-circuit board 6.

Further, by uniting these circuit sections and using them as an exclusive floppy disk controller, it is possible to enhance the function and provide the floppy disk storage device 2' with a higher useful function.

The embodiments have heretofore been described by taking a floppy disk device as an example of the disk storage device. However, the present invention is also applicable to hard disk storage devices, and further to optical disk storage devices or the like.

Embodiments have heretofore been described by referring to the case where both the mechanism section of the disk storage device and the control circuit section thereof are mounted on the main print-circuit board. As evident from the foregoing description, only the control circuit section may be mounted.

## Claims

1. A computer apparatus including at least an arithmetic and processing section (CPU), a main memory (M) and a disk control section (PIF') which are connected to said arithmetic and processing section and which are disposed on one print-circuit board (6), and a disk storage device which can be controlled by said arithmetic and processing section (CPU) via said disk control section (PIF'), said computer apparatus comprising:

    said disk storage device being separated into a mechanism section (21, 22, 23) and a control circuit section (FDC1, FDC2) for controlling said mechanism section; and

    at least said control circuit section (FDC1, FDC2) being mounted on said print-circuit board (6).

2. A computer apparatus according to Claim 1, wherein said disk control section (PIF') and said control circuit section (FDC1, FDC2) are interconnected on said print-circuit board (6) by print-circuit wiring.

3. A computer apparatus according to Claim 1, wherein said disk control section (PIF') and said control circuit section (FDC1, FDC2) are formed as one body in the form of a semiconductor circuit.

4. A computer apparatus according to Claim 1, wherein said disk storage device comprises a floppy disk storage device (2').

5. A computer apparatus according to Claim 1, in which:

    said disk storage device comprises a floppy disk storage device (2');

    a disk driving motor (21) of said floppy disk storage device (2') is disposed on and fixed to one face of said print-circuit board (6); and

    a floppy disk (2a) is mounted on the other face of said print-circuit board (6).

6. A computer apparatus according to Claim 1, in which:

said disk storage device comprises a floppy disk storage device (2');

a disk driving motor (21) of said floppy disk storage device (2') is disposed on and fixed to one face of said print-circuit board (6); and

a floppy disk (2a) and a read write mechanism section (22, 23) for reading/writing data from/onto said floppy disk are disposed on the other face of said print-circuit board (6).

7. A computer apparatus according to Claim 1, wherein said disk mechanism section (21, 22, 23) is united in one body by a frame (24) and mounted on said print-circuit board (6) via said frame.

8. A computer apparatus including at least an arithmetic and processing section (CPU) and a main memory (M) and a disk control section (PIF') connected to said arithmetic and processing section, said arithmetic and processing section, said main memory and said disk control section being disposed and connected on one print-circuit board (6), a disk storage device which can be controlled by said arithmetic and processing secction (CPU) via said disk control section (PIF') being included in said computer apparatus, said computer apparatus comprising:

a rotary mechanism section (21) of said disk storage device, a read write mechanism section (22, 23) for reading/writing data from/onto a disk (2a), a drive circuit section (SMC, HD) for driving said rotary mechanism section and said read write mechanism section, and a control circuit section (FDC) for controlling said drive circuit section being mounted on said print-circuit board (6); and

said disk control section (PIF') and said control circuit section (FDC) being interconnected on said print-circuit board by print-circuit wiring.

9. A computer apparatus according to Claim 8, wherein said disk storage device comprises a floppy disk storage device (2').

10. A computer apparatus according to Claim 8, in which:

said disk storage device comprises a floppy disk storage device (2');

a disk driving motor (21) of said floppy disk storage device (2') is disposed on and fixed to one face of said print-circuit board (6); and

a floppy disk (2a) and a read write mechanism section (22, 23) for reading/writing data from/onto said floppy disk are disposed on the other face of said print-circuit board (6).

11. A computer apparatus including at least an arithmetic and processing section (CPU) and a main memory (M) and a disk control section (PIF') connected to said arithmetic and processing section, said arithmetic and processing section, said main memory and said disk control section being disposed and connected on one print-circuit board (6), a disk storage device which can be controlled by said arithmetic and processing secction (CPU) via said disk control section (PIF') being included in said computer apparatus, said computer apparatus comprising:

a mechanism section (21, 22, 23) of said disk storage device and a control circuit section (FDC1, FDC2) for controlling said mechanism section being mounted on said print-circuit board (6); and

said disk control section (PIF') and said control circuit (FDC1, FDC2) being interconnected on said print-circuit board (6).

12. A computer apparatus according to Claim 11, wherein said disk storage device comprises a floppy disk device (2').

# F I G. I

# F I G. 2

# F I G. 3

# F I G. 4

# F I G. 5

# F I G. 6 PRIOR ART

EP 0 475 049 A2

## F I G. 7 PRIOR ART

## F I G. 8 PRIOR ART